(19) Europäisches Patentamt
European Patent Office
Office européen des brevets

(11) **EP 3 470 892 A2**

(12) **EUROPEAN PATENT APPLICATION**

(43) Date of publication:
**17.04.2019 Bulletin 2019/16**

(51) Int Cl.:
***G02B 5/02*** (2006.01)

(21) Application number: **18193913.3**

(22) Date of filing: **12.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.10.2017 JP 2017197937**
**04.09.2018 JP 2018165261**

(71) Applicant: **AGC INC.**
**Chiyoda-ku,**
**Tokyo 1008405 (JP)**

(72) Inventors:
• **TAO, Yukihiro**
**Chiyoda-ku, Tokyo 100-8405 (JP)**
• **KONDO, Satoshi**
**Chiyoda-ku, Tokyo 100-8405 (JP)**

(74) Representative: **Müller-Boré & Partner**
**Patentanwälte PartG mbB**
**Friedenheimer Brücke 21**
**80639 München (DE)**

(54) **TRANSPARENT SCREEN**

(57)     A screen 20 as a transparent screen has an anisotropy. The screen has a first scattering layer 24 disposed on a side of a first surface thereof and exhibiting scattering. The screen has a second scattering layer 27 disposed on a side of a second surface 22 thereof as a rear side of the first surface 21. When the screen 20 is disposed so as to be directed perpendicularly and exhibit the anisotropy in upward and downward directions, light 28b entering into a surface of the second scattering layer 27 facing the first surface 21 from an upward direction is scattered more strongly than light 28a entering into the surface of the second scattering layer 27 facing the first surface 21 from a lateral direction in the second scattering layer 27.

Fig. 3

**Description**

TECHNICAL FIELD

The present invention relates to a transparent screen.

BACKGROUND ART

Patent Document 1 listed below discloses a transparent screen. Patent Document 2 listed below discloses a hologram screen including a directional scattering hologram.

PRIOR ART DOCUMENTS

PATENT DOCUMENTS

Patent Document 1: WO2015/199026
Patent Document 2: JP-A-2003-294952
Patent Document 3: WO2013/108540

DISCLOSURE OF INVENTION

TECHNICAL PROBLEM

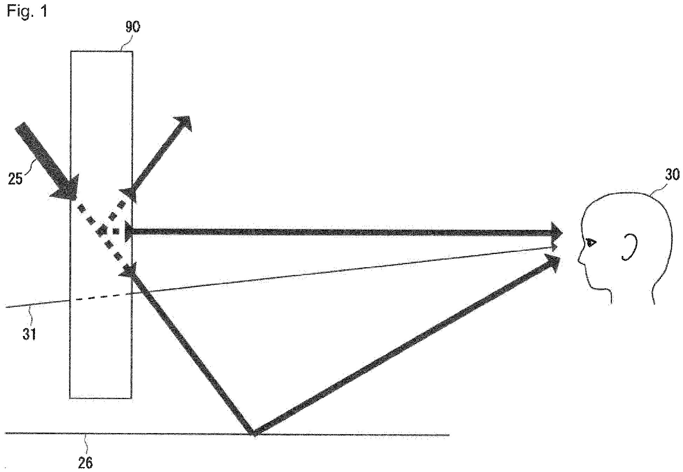

In Fig. 1 is shown a screen 90 as a transmitting type transparent screen. Background light 31 passes through the screen 90. When no image is projected on the screen 90, or when an image projected on the screen 90 includes a dark area, an observer 30 can easily see a sight on the opposite side of the screen 90 to him or her by receiving the background light 31.

With regard to an image light 25 shown in Fig. 1, a part of the image light that is not projected on the screen is projected on a ground 26, in some cases, on the opposite side of the screen 90 in the incoming direction of the image light 25. For this reason, the observer 30 sees an image projected on the ground 26 in front of the screen in such cases. This problem is also applicable to a reflective transparent screen.

SOLUTION TO PROBLEM

The present invention provides the modes listed in the following items:

1. A transparent screen having an anisotropy with respect to light emitting therefrom, comprising:

a first scattering layer, the first scattering layer functioning to project image light on the transparent screen and scattering the image light; and
a second scattering layer, the second scattering layer providing the transparent screen with the anisotropy;
wherein the first scattering layer is disposed on a side of a first surface of the transparent screen, and the second scattering layer is disposed on a side of a second surface of the transparent screen as a rear side of the first surface, or wherein the first scattering layer is disposed on the side of the second surface of the transparent screen, and the second scattering layer is disposed on the side of the first surface of the transparent screen; and
wherein when the transparent screen is disposed so as to be directed perpendicularly and exhibit the anisotropy in upward and downward directions, light entering into a surface of the second scattering layer facing the first surface from an upward direction is scattered more strongly than light entering into the surface of the second scattering layer facing the first surface from a lateral direction in the second scattering layer.

2. The transparent screen recited in item 1, wherein the transparent screen is a transmitting type screen, the transmitting type screen receiving the image light from a rear surface thereof and transmits the image light to a front surface thereof;
wherein the first scattering layer is disposed on the side of the first surface of the transparent screen, and the second scattering layer is disposed on the side of the second surface of the transparent screen;
wherein the first surface is the rear surface of the transparent screen;

wherein the second surface is the front surface of the transparent screen;

wherein the image light enters into a side of the rear surface of the transparent screen from an upward direction and is projected, being scattered when passing through the first scattering layer;

wherein part of the image light emits as transmitted light in a downward direction from the first scattering layer without being scattered at the first scattering layer, and the transmitted light enters into the second scattering layer from an upward direction; and

wherein the transmitted light is scattered at the second scattering layer when passing through the second scattering layer.

3. The transparent screen recited in item 1, wherein the transparent screen is a transmitting type screen, the transmitting type screen receiving the image light from a rear surface thereof and transmits the image light to a front surface thereof;

wherein the first scattering layer is disposed on the side of the second surface of the transparent screen, and the second scattering layer is disposed on the side of the first surface;

wherein the first surface is the rear surface of the transparent screen;

wherein the second surface is the front surface of the transparent screen;

wherein the image light enters into a side of the rear surface of the transparent screen from an upward direction and is scattered at the second scattering layer when passing through the second scattering layer;

wherein the scattered image light emits in a downward direction from the second scattering, and the scattered light enters into the first scattering layer from an upward direction; and

wherein the scattered light is projected, being further scattered when passing through the first scattering layer.

4. The transparent screen recited in item 2 or 3, wherein the transparent screen has a turbidity of at most 40% with respect to light entering into the rear surface of the transparent screen from a lateral direction and emitting from the front surface of the transparent screen in the lateral direction in a section from 15 degrees above to 20 degrees below with respect to a horizontal direction;

wherein the transparent screen has a turbidity of at least 50% with respect to light entering into the rear surface of the transparent screen from an upward direction and emitting from the front surface of the transparent screen in a downward direction in a section effective within at least 44 degrees in a range of 20 degrees below to 81 degrees below with respect to the horizontal direction; and

wherein the turbidity represents a clouding degree depending on an incident angle of light, and the turbidity has a strength represented by the following formula:

$$100 \times (1 - (\text{light flux having an inclination angle of} \pm 8.5 \text{ degrees to optical axis})/(\text{light flux having an inclination angle of} \pm 1.7 \text{ degrees to optical axis})) \ (\%).$$

5. The transparent screen recited in any one of items 2 to 4, wherein the second scattering layer includes a louver structure where two kinds of layers having different refractive indices are alternately laminated; and

wherein the louver structure has a laminating direction crossing with a thickness direction of the second scattering layer, and the two kinds of layers are disposed to be inclined.

6. The transparent screen recited in any one of items 2 to 5, wherein the first scattering layer is disposed between two transparent plates disposed on a side of the front surface and the side of the rear surface of the screen, respectively; and

wherein the second scattering layer confronts the first scattering layer with a transparent plate on the side of the front surface being interposed between the second scattering layer and the first scattering layer.

7. The transparent screen recited in item 6, wherein each of the two transparent plates is made of glass; and

wherein the second scattering layer is bonded, as a film, to the transparent plate on the side of the front surface.

8. The transparent screen recited in any one of items 2 to 7, wherein the transparent screen is configured to be disposed in a perpendicular direction or in a direction other than the perpendicular direction and configured to be disposed so as to exhibit the anisotropy in an upward direction, a downward direction or a direction other than these directions.

9. An image display system including the transparent screen recited in any one of items 2 to 8, and a projector; wherein:

(a) the transparent screen is disposed such that the light entering from the upward direction is scattered more strongly than the light entering from the lateral direction in the second scattering layer, and

the projector projects the image light in an upward direction on the side of the rear surface toward the rear surface from a direction within 40 degrees in right and left, or

(b) the transparent screen is disposed upside down such that the light entering from a downward direction is scattered more strongly than the light entering from the lateral direction in the second scattering layer, and the projector projects the image light in a downward direction on the side of the rear surface toward the rear surface from a direction within 40 degrees in right and left.

10. A structure, which is any one of an architecture, a vehicle, a ship and an airplane, including the image display system recited in item 9;
wherein the transparent screen is disposed at a site where outdoor light is applied to the transparent screen;
wherein the image display system displays an image toward outside the structure; and
wherein the transparent screen and the projector are disposed as recited in (a) of item 9.

11. The transparent screen recited in item 1, which is a reflective screen, the reflective screen receiving the image light on a front surface thereof and returning the image light from the front surface;
wherein the first scattering layer is disposed on the side of the first surface of the transparent screen, and the second scattering layer is disposed on the side of the second surface of the transparent screen;
wherein the first surface is the front surface of the transparent screen;
wherein the second surface is a rear surface of the transparent screen;
wherein the image light enters into the side of the front surface of the transparent screen from an upward direction and is projected, being scattered when being reflected at the first scattering layer;
wherein part of the image light emits as transmitted light in a downward direction from the first scattering layer without being scattered at the first scattering layer, and the transmitted light enters into the second scattering layer from an upward direction; and
wherein the transmitted light is scattered at the second scattering layer when passing through the second scattering layer.

12. The transparent screen recited in item 1, which is a reflective screen, the reflective screen receiving the image light on a front surface thereof and returning the image light from the front surface;
wherein the first scattering layer is disposed on the side of the second surface of the transparent screen, and the second scattering layer is disposed on the side of the first surface of the transparent screen;
wherein the first surface is the front surface of the transparent screen;
wherein the second surface is a rear surface of the transparent screen;
wherein the image light enters into a side of the front surface of the transparent screen from an upward direction, and is scattered at the second scattering layer when passing through the second scattering layer;
wherein the scattered image light emits in a downward direction from the second scattering layer, and the scattered light enters into the first scattering layer from an upward direction; and
wherein the scattered light is projected, being further scattered when being reflected at the first scattering layer.

13. A transparent screen having an anisotropy with respect to light emitting therefrom;
wherein the anisotropy is such that when the transparent screen is displaced so as to be directed perpendicularly and exhibit the anisotropy in upward and downward directions, light emitting in a downward direction from a side of a second surface of the transparent screen as a rear side of a first surface of the transparent screen after entering from an upward direction on a side of the first surface of the transparent screen is scattered more strongly than light emitting from the side of the second surface in a lateral direction after entering into the side of the first surface of the transparent screen from an upward direction; and
wherein the lateral direction includes a horizontal direction.

14. A transparent screen having an anisotropy with respect to light emitting therefrom, including:

a scattering layer, the scattering layer functioning to project image light on the transparent screen, being disposed on a side of a first surface of the transparent screen and scattering the image light; and
an absorber layer, the absorber layer being disposed on a side of a second surface of the transparent screen as a rear side of the first surface and providing the transparent screen with the anisotropy;
wherein when the transparent screen is displaced so as to be directed perpendicularly and exhibit the anisotropy in upward and downward directions, light entering from an upward direction into a surface of the absorber layer facing the first surface of the transparent screen is absorbed more than light entering from a lateral direction into the surface of the absorber layer facing the first surface.

15. The transparent screen recited in any one of items 11 to 14, which the transparent screen is configured to be disposed in a perpendicular direction or in a direction other than the perpendicular direction and configured to be disposed so as to exhibit the anisotropy in an upward direction, a downward direction or a direction other than these directions.

ADVANTAGEOUS EFFECTS OF INVENTION

It is possible to minimize the occurrence of a trouble where part of the image light that is not projected on the screen is projected on a ground on the opposite side of the screen in the incoming direction of the image light.

BRIEF DESCRIPTION OF DRAWINGS

Fig. 1 is a side view of a conventional transparent screen.
Fig. 2 is a side view of the transparent screen according to an embodiment of the present invention.
Fig. 3 is a right side view of the image display system according to an embodiment of the present invention.
Fig. 4 is a schematic view showing a transparent section and an obstacle section.
Fig. 5 is a schematic view showing a visual field.
Fig. 6 is a perspective view of the transparent screen.
Fig. 7 is a right side view of the image display system according to another embodiment of the present invention.
Fig. 8 is a side view of the transparent screen according to the embodiment.
Fig. 9 is a cross-sectional image of the vision control film according to the embodiment.
Fig. 10 is a right side view of the image display system is an example.
Fig. 11 is a schematic view of an observed image of a table surface.
Fig. 12 is a schematic view of another observed image of the table surface.
Fig. 13 is a schematic view of another observed image of the table surface.
Fig. 14 is a schematic view of another observed image of the table surface.
Fig. 15 is a schematic view of another observed image of the table surface.
Fig. 16 is a schematic view of another observed image of the table surface.
Fig. 17 is a schematic view of another observed image of the table surface.
Fig. 18 is a schematic view of another observed image of the table surface.

DESCRIPTION OF EMBODIMENTS

[1. Transparent screen]

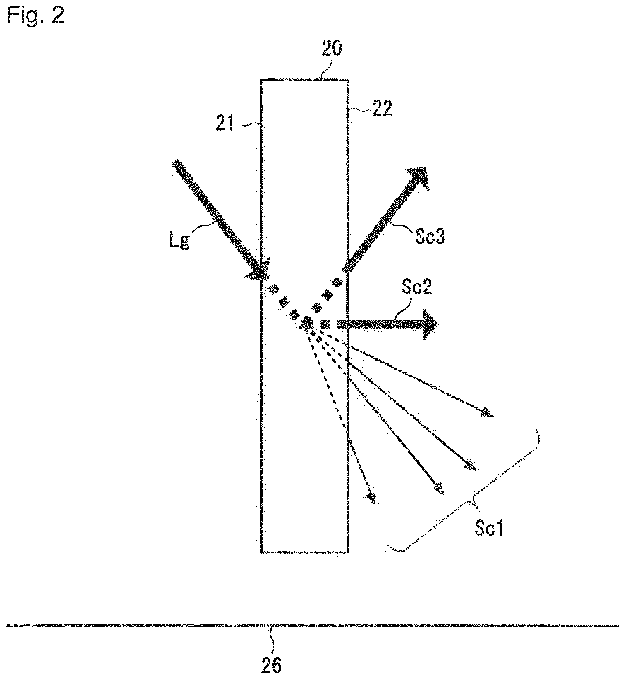

In Fig. 2 is shown a screen 20 as the transparent screen according to an embodiment of the present invention. The screen 20 has a scattering anisotropy with respect to light emitted from the screen 20 as described below. In Description, the wording "scattering" means light scattering. The wording "scattering" includes so-called forward scattering and back scattering. The wording "back scattering" includes diffuse reflection. The wording "scattering" includes Mie scattering.

In Fig. 2, the screen 20 is disposed perpendicular to a horizontal ground 26 as an example. The screen 20 is disposed so as to exhibit an anisotropy in upward and downward directions.

The direction to dispose the screen is exemplified in Fig. 2 for convenience of explanation. This is also applicable to the other embodiments and explanation thereof. The screen may be also disposed in direction other than the perpendicular direction. Further, the screen may be disposed so as to exhibit an anisotropy in direction other than the upward and downward directions. The screen may be brought into or out of contact with the ground. The screen may be disposed on the ground or be suspended from a ceiling or the like.

The ground is an example of a horizontal surface. The ground 26 may be replaced by a horizontal floor or a horizontal table surface. When the wording "ground" is used in the following explanation, any other horizontal surface than the ground should be included in the same category as a technical equivalent unless otherwise specified. Since the screen can be disposed in direction other than the perpendicular direction, it is optional that the ground 26 is horizontal. It is also optional that the screen 20 and the ground 26 are directed at right angles to each other.

The screen 20 shown in Fig. 2 includes a first surface 21 and a second surface 22 as a rear side of the first surface 21. As one example, light Lg enters into the first side 21 from an upward direction. The light Lg is scattered by the scattering screen 20. The scattered light emits from the second surface 22 as the rear side of the first surface 21. What is shown in this Figure is so-called forward scattering.

The scattered light is classified into scattered light Sc1, scattered light Sc2 and scattered light Sc3 according to emitting directions in Fig. 2. Part of the light Lg emits as scattered light Sc1 in a downward direction. Another part of the light Lg emits as scattered light Sc2 in a lateral direction. The wording "lateral direction" includes a horizontal direction. The scattering effect given to the scattered light Sc1 is stronger than that given to the scattered light Sc2. Scattered light Sc3 is scattered light emitting in an upward direction.

[2. Transmitting type screen and Image display system]

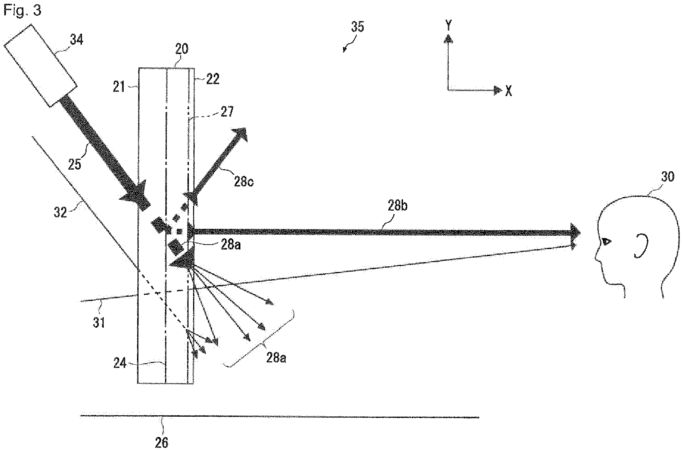

In Fig. 3 is shown an image display system 35. The image display system 35 utilizes the screen 20 as a transmitting type transparent screen. The screen 20 includes a first scattering layer 24 and a second scattering layer 27. The first scattering layer 24 is disposed on a side closer to the first surface 21 than the second scattering layer 27. The first scattering layer 24 may be an outermost layer on a side where the first surface 21 is disposed. The second scattering layer 27 is disposed on a side closer to the second surface 22 than the first scattering layer 24. The second scattering layer 27 may be an outermost layer on a side where the second surface 22 is disposed. The order of the first scattering layer 24 and the second scattering layer 27 is interchangeable with each other. The second scattering layer 27 may be disposed on the side closer to the first surface 21 than the first scattering layer 24.

The image display system 35 shown in Fig. 3 includes a projector 34. The screen 20 has the first surface 21 directed to a rear side. The screen 20 has the second surface 22 directed to a front side. The screen 20 is disposed such that the scattering effect given to the scattered light emitting in the downward direction is stronger than that given to the scattered light emitting in the lateral direction as in the state shown in Fig. 2.

In Fig. 3, a plus X direction is defined as the front side, a minus X direction is defined as the rear side, a plus Y direction is defined as an upward side, and a minus Y direction is defined as a downward side. They are also applicable to the other figures.

The projector 34 shown in Fig. 3 emits image light 25 toward to the rear side of the screen 20. The screen 20 receives the image light 25 on the rear side. The screen 20 emits the received image light 25 from the front side.

In Fig. 3, the image light 25 enters into the rear side of the screen 20 from an upward direction. The image light 25 passes through the first scattering layer 24. The image light 25 is projected on the screen 20 by being scattered at the first scattering layer 24. The scattering effect at the first scattering layer 24 is so-called forward scattering. The image projected by the image light 25 may be a still image or a motion image.

As shown in Fig. 3, the image light 25 is scattered at the first scattering layer 24 to create image light 28a, image light 28b and image light 28c. The image light 28a, the image light 28b and the image light 28c emit from a front side of the first scattering layer 24. After that, the image light 28a, the image light 28b and the image light 28c pass through the second scattering layer 27. The image light 28a, the image light 28b and the image light 28c emit in a downward direction, in a lateral direction and in an upward direction from the first scattering layer 24, respectively, and head toward the second scattering layer 27. The wording "lateral direction" means a direction including a horizontal direction.

The scattering effect given to the image light 25 by the first scattering layer 24 shown in Fig. 3 may be isotropic. The first scattering layer 24 may be formed as a layer having a certain thickness. Such a layer may have scattering particles regularly or irregularly dispersed therein. The first scattering layer 24 may be configured as a hologram, a louver structure or the like.

The image light 28a shown in Fig. 3 enters into a rear side of the second scattering layer 27. The image light 28a passes through the second scattering layer 27 and emits in a downward direction from a front side of the second scattering layer 27. The image light 28a finally emits in a downward direction from the front side of the screen 20.

In Fig. 3, the image light 28a is further scattered at the second scattering layer 27. The second scattering layer 27 does not need to be an interface. The second scattering layer 27 may be formed as a layer having a certain thickness. An appropriate mode of the second scattering layer will be described later.

In Fig. 3, part of the image light 25 is not scattered at the first scattering layer 24. Such part of the light emits in a downward direction as the image light 28a from the first scattering layer 24. In other words, the image light 28a is a mixture of light produced by forward scattering at the first scattering layer 24, and light that travels as transmitted light without being substantially scattered. A component of the image light 28a that travels as transmitted light is also scattered at the second scattering layer 27 as described above.

The image light 28b shown in Fig. 3 enters into the rear side of the second scattering layer 27 from a lateral direction. The lateral direction means a direction including a horizontal direction. The image light 28b passes through the second scattering layer 27 and emits from the second scattering layer 27 in the lateral direction. The image light 28b emits from the front side of the screen in the lateral direction.

The second scattering layer 27 shown in Fig. 3 is an anisotropic scattering layer. For this reason, the scattering effect given to the downward image light 28a at the second scattering layer 27 is stronger than the scattering effect given to the lateral image light 28b. In this Figure, the image light 28b is not substantially scattered at the second scattering layer 27, or is not scattered to such a degree that the transparency of the screen 20 is reduced.

The image light 28c shown in Fig. 3 enters into the rear side of the second scattering layer 27 from a downward direction. The image light 28c passes through the second scattering layer 27 and emits from the second scattering layer 27 toward an upward direction. The image light 28c shown in Fig. 3 emits from the front side of the screen 20 toward the upper direction.

The scattering effect given to the image light 28a at the second scattering layer 27 shown in Fig. 3 may be stronger than the scattering effect given to the image light 28c. In this Figure, the image light 28c is not substantially scattered at the second scattering layer 27 or is not scattered to such a degree that the transparency of the screen 20 is reduced.

Background light 31 travels from the rear side of the screen 20 toward the front side of the screen 20 in a lateral direction. The background light 31 passes through the first scattering area 24 without being substantially scattered. The background light 31 that has passed through the first scattering layer 24 passes through the second scattering layer 27 without being substantially scattered.

When the image light 25 shown in Fig. 3 is not projected on the screen 20, an observer 30 can see a sight behind the rear side of the screen 20 by receiving the background light 31. When an image projected on the screen 20 includes a dark area, the observer 30 can see a sight behind the rear side of the screen 20 by receiving the background light 31 through the dark area.

The scattering anisotropy at the second scattering layer 27 shown in Fig. 3 does not need to selectively have an effect only on the image light 28a. In other words, background light 32, which travels toward a downward direction, may be scattered at the second scattering layer 27 unlike the background light 31, which travels toward the lateral direction. In this embodiment, the screen 20 not only have a function as an anisotropic transparent screen but also have a shielding function to the downward background light 32.

The image display system 35 shown in Fig. 3 can minimize the occurrence of the trouble where part of the image light 25 that is not projected on the screen 20 is projected on the ground 26 on the opposite side of the screen 20 in the incoming direction of the image light 25.

[3. Visual field and anisotropy]

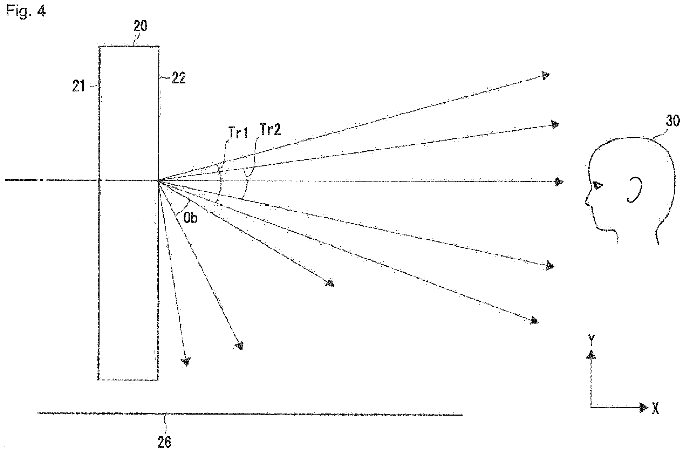

In Fig. 4 are shown a transparent section and an obstacle section of the screen 20. In Description, the haze in a lateral direction related to the transparent section is determined to be a haze to light, which enters into the first surface 21 or the rear side of the screen from the lateral direction and emits from the second surface 22 or the front side of the screen in the lateral direction. The haze in a downward direction related to the obstacle section is determined to be a haze to light, which enters into the first surface 21 or the rear side of the screen from an upward direction and emits from the second surface 22 or the front side of the screen in a downward direction.

A transparent section Tr1 in the lateral direction shown in Fig. 4 is in a range of 15 degrees above to 20 degrees below with respect to the horizontal direction. The haze in the lateral direction may be defined as the haze in this section. The haze in the lateral direction is preferably at most 40%, more preferably at most 30%, furthermore preferably at most 20%, most preferably at most 10% in the transparent section Tr1. The haze referred to here is a haze to light that passes through both of the first scattering layer 24 and the second scattering layer 27.

The haze is an index related to the transparency of a film. The haze represents a turbidity (clouding degree) of a film. The haze is found based on the proportion of diffuse transmitted light to total transmitted light according to the following formula. The haze is affected by the surface roughness of a film. The haze may be measured by a haze meter.

$$Haze\ (\%) = Td/Tt \times 100$$

    Td: Diffuse transmittance
    Tt: Total light transmittance

A transparent section Tr2 in the lateral direction shown in Fig. 4 is in a range of 8 degrees above to 12 degrees below with respect to the lateral direction. The haze in the lateral direction may be defined as the haze in this section. The haze in the lateral direction is preferably at most 30%, more preferably at most 20%, furthermore preferably at most 10%, most preferably at most 5% in the transparent section Tr2. The haze referred to here is a haze to light that passes through both of the first scattering layer 24 and the second scattering layer 27.

The obstacle section Ob in a downward direction shown in Fig. 4 is a section effective within at least 44 degrees. The obstacle section Ob is in a range of 20 degrees below to 81 degrees below with respect to the horizontal direction. The clouding degree in the downward direction is preferably at least 50%, more preferably at least 60%, most preferably at least 70% in the obstacle section Ob.

The "value of turbidity" is a concept that is different from the haze. Specifically, the haze represents a clouding degree with respect to an incident angle of 0 degree (at 90 degrees to the interface) while the "value of turbidity" is a value depending on an incident angle. The measure of a value of turbidity is made such that a sample is placed at a position of about 50 mm closer to a light source from the incident port of the integrating sphere of a haze meter, and light flux is measured with the sample being rotated to vary the angle of the sample surface to the optical axis. In Description, the clouding degree depending on an incident angle thus obtained is determined as the value of turbidity. The value of turbidity at each incident angle is represented by the following formula:

$$100\times(1-(\text{light flux having an inclination angle within }\pm8.5\text{ degrees to optical axis})/$$

$$(\text{light flux having an inclination angle within }\pm1.7\text{ degrees to optical axis}))\ (\%)$$

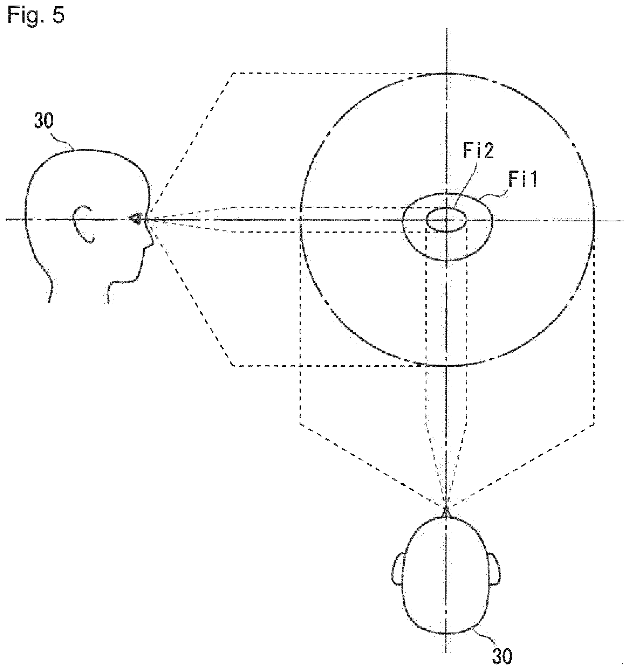

In Fig. 5 is shown the visual field of the observer 30 who watches the screen 20 in the horizontal direction. A visual field Fi1 ranges from 15 degrees above and 20 degrees below with respect to the horizontal direction and has a greater range than 15 degrees in right and left. Wider areas than the visual field Fi1 are called a stably gazing field, a guiding visual field and an auxiliary visual field according to enlargement in some cases. The stably gazing field is supposed to be an area where an observer can gaze comfortably by eye movement or head motion to receive information effectively.

In Fig. 5 is also shown a visual field Fi2 ranging from 8 degrees above and 12 degrees below, and from 15 degrees in left and 15 degrees in right with respect to the horizontal direction. The visual field Fi2 is an area called an effective visual field. The effective visual field is supposed to be an area where an observer can instantly receive information only by eye movement.

In a case where the observer 30 confronts the front side of the screen 20 as shown in Fig. 4, when the transparent section Tr1 has a haze in any one of the above-mentioned ranges, the observer 30 can see a sight on the rear side of the screen 20 through the screen in particular an area in a perpendicular direction in the visual field Fi1 of the observer 30 shown in Fig. 5.

In a case where the observer 30 confronts the front side of the screen 20 as shown in Fig. 4, when the transparent section Tr2 has a haze in any one of the above-mentioned ranges, the observer 30 can see a sight on the rear side of the screen 20 through the screen in particular an area in the perpendicular direction in the visual field Fi2 of the observer 30 shown in Fig. 5.

The background light passing through the obstacle section Ob shown in Fig. 4 is not normally observed in particular an area in the perpendicular direction in the visual field Fi1 of the observer 30 shown in Fig. 5. Thus, the scattering anisotropy caused by the screen is hardly to be an obstacle when the observer 30 sees a sight on the rear side of the screen 20 through the screen.

[4. Configuration of transparent screen]

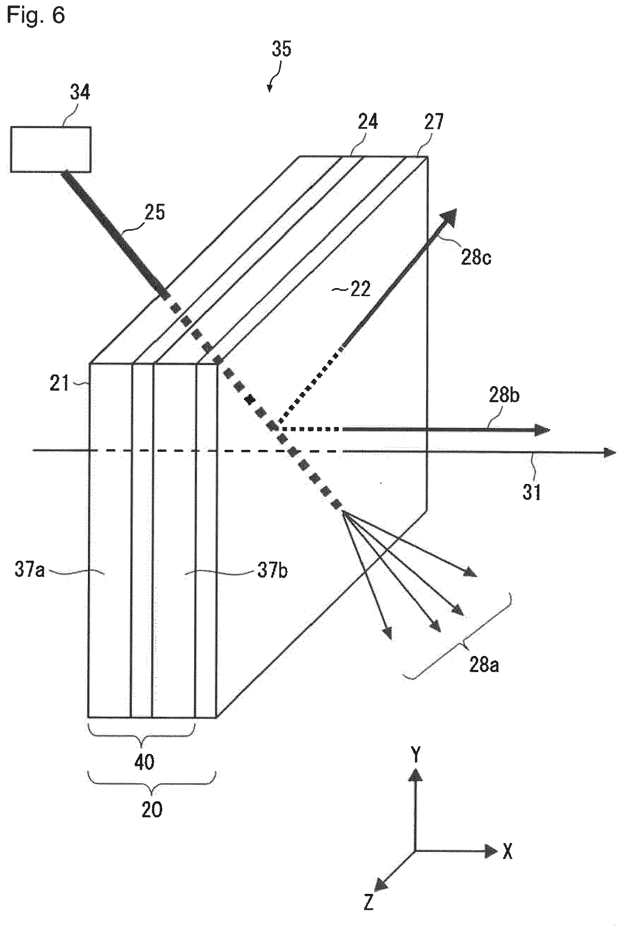

In Fig. 6 is shown a screen 20, which is formed in a plate shape. The screen 20 includes a screen body 40 and the second scattering layer 27. The screen body 40 includes a transparent plate 37a, a transparent plate 37b and the first scattering layer 24. The screen body 40 may be a transmitting type transparent member for image display disclosed in Patent Document 1.

In Fig. 6, a plus Z direction is defined as a right side. The right side means a right area on the basis of the front side of the screen 20. A minus Z direction is defined as a left side. The left side means a left side on the basis of the front side of the screen 20.

The transparent plate 37a shown in Fig. 6 is disposed on a rear side of the first scattering layer 24. The transparent plate 37b is disposed on a front side of the first scattering layer 24. The first scattering layer 24 is disposed between the transparent plates 37a and 37b. The transparent plates 37a and 37b are preferably made of glass. The second scattering layer 27 and the first scattering layer 24 confront each other, interposing the transparent plate 37b therebetween.

The second scattering layer 27 shown in Fig. 6 may be bonded, as a film, to the transparent plate 37b. An anisotropic light-diffusing film having a louver structure as disclosed in Patent Document 3 may be advantageously used as the second scattering layer 27. A volume hologram, an arrangement where layer structures having different refractive indices from the transparent plate in a non-parallel direction are laminated as layers, or an arrangement where pillar structures having different refractive indices from the transparent plate in a non-parallel direction are arrayed in an inclination manner is also applicable.

The screen body 40 shown in Fig. 6 has a certain forward haze. In Description, the forward haze means the proportion of light deviated by at least 0.044 rad (2.5 degrees) from the traveling direction of the light by so-called forward scattering, among the transmitted light traveling from a first surface 21 to a second surface 22 of the transparent screen 20. The forward scattering may be represented by percentage (%). The forward scattering may be a so-called usual haze which is measured by the method described in JIS K7136: 2000 (ISO 14782: 1999).

The screen body 40 shown in Fig. 6 has a forward haze of preferably at least 4%, more preferably at least 5%. When the haze is at least 4%, the screen 20 can be provided with preferred screen gain and viewing angle.

The screen body 40 shown in Fig. 6 has a forward haze of preferably at most 40%, more preferably at most 30%. When the haze is at most 40%, the visibility of a sight visible on the opposite side of the screen 20 as viewed from the observer is further improved. In order that the screen 20 can be recognized as being transparent by the observer, the screen body 40 as a forward haze of preferably at most 40%.

The screen body 40 shown in Fig. 6 has a certain transmittance. In Description, the transmittance represents the ratio of a total amount of light passing through the screen body 40 or scattered at the screen body 40 and further emitting from the second surface 22 of the screen body 40, to an amount of light entering into the first surface 21 of the screen body 40. The transmittance may be represented by percentage (%). The screen body 40 has a transmittance of preferably at least 1 %, more preferably at least 5%. When the transmittance is at least 1 %, the visibility of a sight visible on the opposite side of the screen 20 as viewed from the observer is improved.

[5. Reflective screen and image display system]

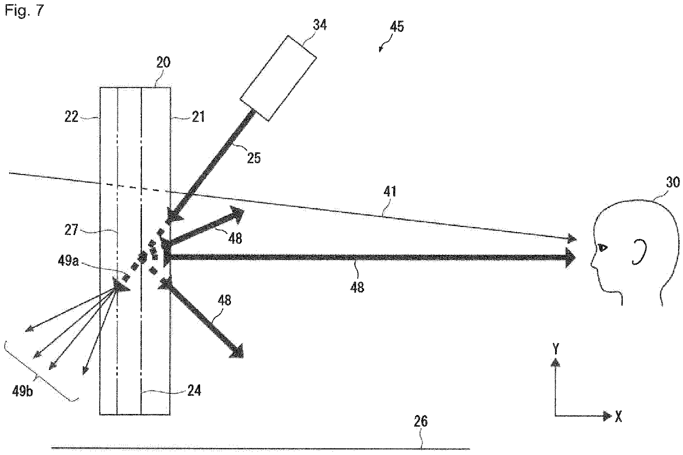

In Fig. 7 is shown an image display system 45. As shown in Fig. 7, the above-mentioned screen 20 may be utilized as a reflective transparent screen by reversing the front and rear sides thereof.

The image display system 45 shown in Fig. 7 includes the screen 20. The screen 20 receives image light 25 from the front side. The screen 20 returns the image light 25 toward the front side. The screen has a first surface 21 facing the front side. The screen has a second surface 22 facing the rear side.

The screen 20 shown in Fig. 7 may provide diffuse reflection. The diffuse reflection may be isotropic. The screen may be a screen with no diffuse reflection, such as a retroreflective screen or a specular-diffuse screen. The retroreflective screen or the specular-diffuse screen may be isotropic.

The image light 25 shown in Fig. 7 is incident from an upward direction on the front side of the screen. The image light 25 is reflected at the first scattering layer 24. At that time, the image light 25 is scattered to produce scattering light 48. Thus, the image light 25 is projected on the screen 20.

Part of the image light 25 shown in Fig. 7 emits as transmitted light 49a in a downward direction from the rear side of the first scattering layer 24 without being scattered at the first scattering layer. The transmitted light 49a enters into the front side of the second scattering layer 27 from an upward direction. The transmitted light 49a passes through the second scattering layer 27. The transmitted light 49a is scattered at the second scattering layer 27. The transmitted light 49a emits as scattered light 49b in a downward direction from the rear side of the second scattering layer 27.

As shown in Fig. 7, background light 41, which travels in a lateral direction, passes through the second scattering layer 27 without being substantially scattered. The background light 41 that has passed through the second scattering layer 27 passes through the first scattering layer 24 without being substantially scattered.

The image display system 45 shown in Fig. 7 can minimize the occurrence of the trouble where part of the image light 25 that is not projected on the screen 20 is projected on a ground 26 on the opposite side of the screen 20 in the incoming direction of the image light 25.

When the screen 20 shown in Fig. 3 or Fig. 7 cannot be utilized as a reflective transparent screen, the screen 20 may be utilized as a transmitting type transparent screen as described above. Likewise, when the screen 20 cannot be utilized as a transmitting type transparent screen, the screen 20 may be utilized as a reflective transparent screen as described above.

[6. Transparent screen having anisotropy in absorption]

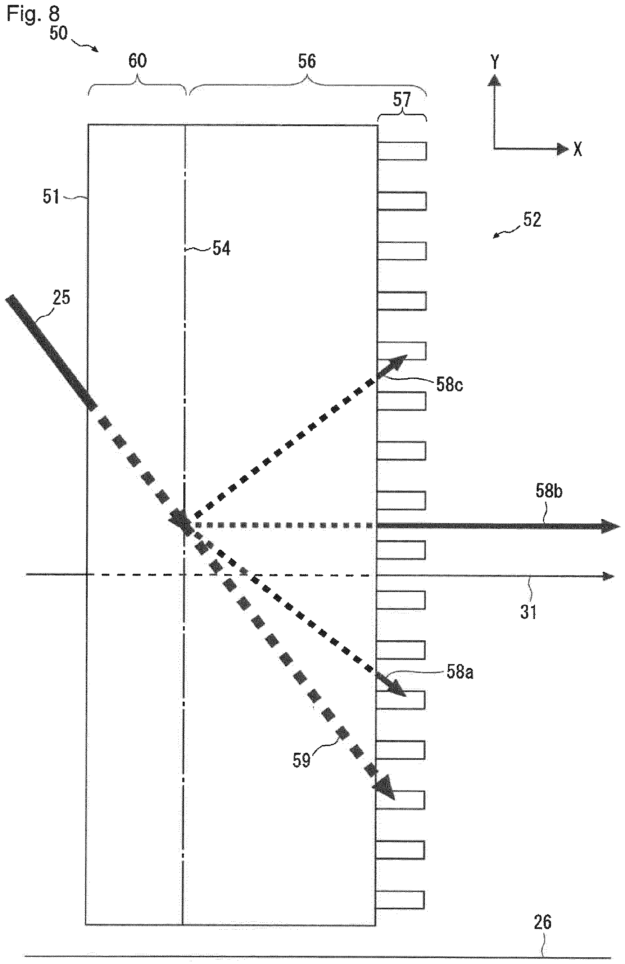

In Fig. 8 is shown a screen 50 as a transparent screen. The screen 50 has a certain anisotropy with respect to light emitting from the screen 50.

In Fig. 8, a screen 50 is disposed perpendicularly to a horizontal ground 26 as an example. The screen 50 is disposed so as to exhibit an anisotropy in upward and downward directions. The screen 50 may be disposed in a direction other than the perpendicular direction. The screen 50 may be disposed so as to exhibit an anisotropy in a direction other than the upward or downward direction.

The screen 50 shown in Fig. 8 includes a first surface 51 and a second surface 52 as a rear side of the first surface 51. The screen 50 includes a scattering layer 54 and louvers 57 serving as an absorber layer.

The scattering layer 54 shown in Fig. 8 is a layer which is disposed at a central portion of the screen 50. The scattering layer 54 may be an outermost layer on the first surface 51. The scattering layer 54 serves a function of projecting image light on the screen 50. The light scattering at the scattering layer 54 is preferably isotropic. The scattering layer 54 may be replaced by the first scattering layer 24 described above.

The louvers 57 shown in Fig. 8 provide the screen 50 with a certain anisotropy. In one example, the louvers 57 are ones formed on the second surface 52. The louvers 57 are successively disposed on the second surface 52 from upward to downward. In one example, the louvers 57 are black.

The image light 25 shown in Fig. 8 is scattered at the scattering layer 54. Thus, the image light 25 can be projected on the screen 50. Downward scattered light 58a produced by the scattering enters into the louvers 57 from an upward direction. Upward scattered light 58c enters into the louvers 57 from a downward direction. The energies of the scattered light 58a and the scattered light 58c are absorbed into the louvers 57 and are eliminated.

As shown in Fig. 8, scattered light 58b in a lateral direction produced by the scattering, and the louvers 57 are directed to the same direction. The scattered light 58b is not substantially absorbed into the louvers 57. At the louvers 57, the scattered light 58a is absorbed more than the scattered light 58b.

Part of the image light 25 shown in Fig. 8 reaches, as transmitted light 59, the louvers 57 without being scattered at the scattering layer 54. The louvers 57 absorb the transmitted light 59.

The louvers 57 shown in Fig. 8 transmit background light 31 in the lateral direction. The louvers 57 absorb background light entering into the screen 50 in a downward direction or an upward direction. The louvers 57 also serves as an anisotropic filter for peep prevention.

As shown in Fig. 8, a screen body 60 includes a scattering layer 54 in an example. In an example, a film 56 includes the absorber layer including the louvers 57. The screen 50 may be formed by bonding the film 56 to the screen body 60. The screen body 60 may be replaced by the above-mentioned screen body 40.

The screen 50 shown in Fig. 8 can minimize the occurrence of the trouble where part of image light 25 that is not projected on the screen 50 is projected on the ground 26 on the opposite side of the screen 50 in the incoming direction of the image light 25.

The screen 50 shown in Fig. 8 is a transmitting type screen. The screen 50 may be a reflective screen. In this Figure, the first surface 51 serves as a surface where the image light 25 emits. When the screen is a reflective screen, the second surface 52 serves as a surface where the image light 25 emits.

When the screen 50 shown in Fig. 8 cannot be utilized as a reflective transparent screen, the screen 50 may be utilized as a transmitting type transparent screen as described above. Likewise, when the screen 50 cannot be utilized as a transmitting type transparent screen, the screen 50 may be utilized as a reflective transparent screen as described above.

[7. Modification in embodiments]

It should be noted that the present invention is not limited to the embodiments described above, and that numerous modifications and variations of the present invention are possible in light of the disclosure without departing from the scope of the present invention. In the embodiments, downward light is strongly scattered or absorbed. In another embodiment, upward light may be strongly scattered or absorbed. Thus, when image light is projected on the transparent screen from a downward direction, it is possible to minimize the occurrence of a trouble where the image light, which passes through the transparent screen toward an upward direction, is projected on a ceiling.

The transparent screen shown in each of the Figures may be utilized such that the front and rear sides are reversed. In other words, the transparent screen, which has the front side facing the plus X direction, may be disposed so as to have the front side facing the minus X direction. In this case, the image light is projected on the front side of a transmitting type screen. Light emitting from the rear side of the screen reaches an observer. In the case of a reflective screen, the image light is projected on the rear side of the screen, and light emitting from the rear side reaches the observer.

When the screen 20 is seen from the front, the screen 20 is rectangular as shown in Fig. 6. In the embodiments, the shape of the transparent screen is not limited to be rectangular. The wording "rectangular" include a square. On the transparent screen, the direction where the transparent screen exhibits an anisotropy does not depend on the outer shape of the transparent screen. For example, even when the transparent screen is rectangular, the direction where the anisotropy is exhibited may be vertical, transverse or slant.

The image display system shown in each of the Figures may be disposed in any one of structures including an architecture, a vehicle, a ship and an airplane. The architecture may be disposed on another architecture. The vehicle may be a rolling stock or an automobile. The automobile may be a bus. The transparent screen may be disposed in an opening of a structure. The transparent screen may be utilized as a window, which separates the inside and outside of a structure.

The image display system may be utilized as digital signage. The digital signage may be disposed in or outside any one of the above-mentioned structures. The digital signage includes an image display system incorporated into any one of the above-mentioned structures. An image may be displayed toward outside an architecture by projecting image light on a window disposed in the architecture.

The transparent screen may be disposed at a site where outdoor light is available. The outdoor light includes direct sunlight and scattered sunlight in the atmosphere or environment. The image display system may display an image toward outside a structure. When the outdoor light downpours from an upward direction, the projector preferably projects image light toward the transparent screen from an upward direction as shown in each of the Figures. When there is no outdoor light as at night, the projector may project image light toward the transparent screen from a downward direction as described above.

EXAMPLES

[8. Designing of transparent screen]

A transparent screen is designed to fabricate a transmitting type image display system 35 as shown in Fig. 6. A vision control film, which is supplied by Lintec Corporation under the product name Y-2555, is utilized as a second scattering layer 27. The vision control film is bonded, as the second scattering layer 27, to a front surface of a screen body 40. The bonding direction of the film is selected such that image light 28a emitting from the screen body 40 in a downward direction is selectively scattered.

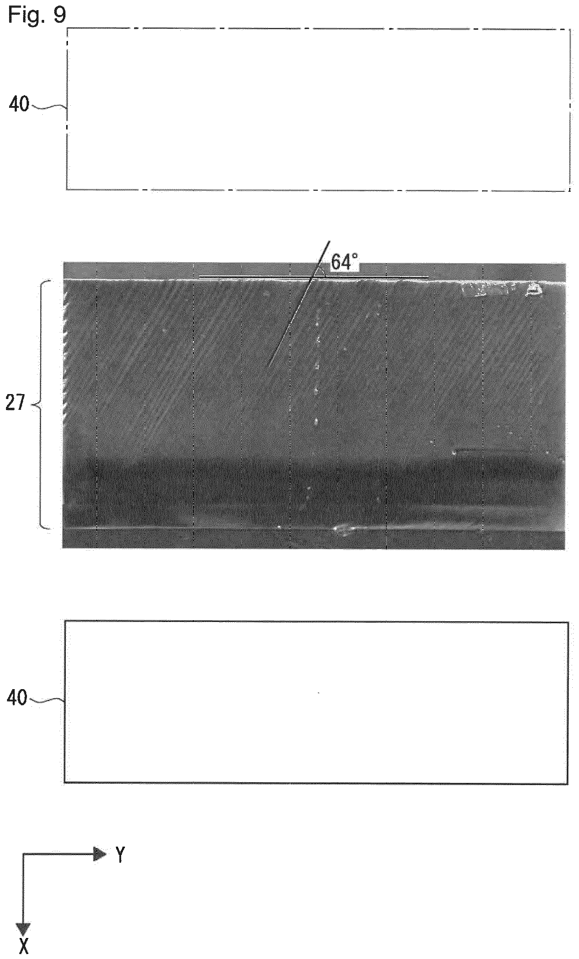

In Fig. 9 is shown a cross-sectional view of the second scattering layer 27, which is made of the vision control film. A vision control film has a louver structure where two kinds of layers having different refractive indices are alternately laminated. In the louver structure, these layers are disposed to be inclined. The louver structure has a laminating direction crossing with a thickness direction of the film. The two kinds of layers have some inclination angles from 64 to 68 degrees on the basis of the longitudinal direction of the film (Y axis direction). The inclination may change halfway in the thickness direction of the film.

The vision control film (the second scattering layer 27) is bonded to the screen body 40 indicated by a solid line in Fig. 9. In the case of the vision control film having some parts with a different inclination angle from other parts, the vision control film may be bonded so as to have a larger louver inclination angle side facing the screen body 40 or a smaller louver inclination angle side facing the screen body 40.

In the finished transparent screen, the vision control film (second scattering layer 27) has the plus X direction extending in a direction away from the front surface of the transparent screen. The vision control film (second scattering layer 27) has the plus Y direction extending toward a top side of the transparent screen. The vision control film (second scattering layer 27) has the minus Y direction directed toward a bottom side of the transparent screen. The image light enters into the louver structure from the minus X direction in Fig. 9.

[9. Projection on transparent screen]

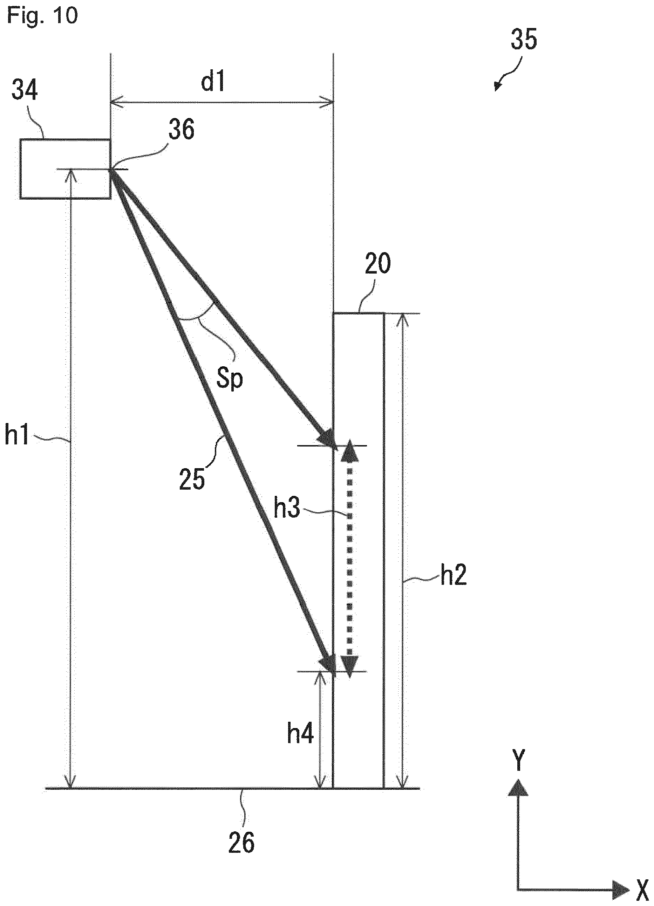

The positional relationship between the screen 20 and the projector 34 is determined as shown in Fig. 10. The distance d1 between the screen 20 and the projector 34 is 110 mm. The projector 34 includes a lens 36 having the center apart from a ground 26 by a distance h1 of 250 mm. The screen 20 has a height h2 of 200 mm. When the image light 25 is projected on the screen 20, the screen has a projection area having a height h3 of 130 mm. The projection area ranges from 65 mm above to 65 mm below with respect to the center of the screen 20. The projection area has a lower end apart from the ground 26 by a distance h4 of 35 mm.

In the positional relationship among the respective devices shown in Fig. 10, the image light 25 has a diffusion angle Sp of about 25 degrees. The above-mentioned positional relationship may be properly modified because the diffusion angle Sp varies on a projector selected as the projector 34. The diffusion angle Sp of the projector may be selected in a range of at least 25 degrees to at most 44 degrees for example. Keystone correction may be used to remove a distortion in a projected image.

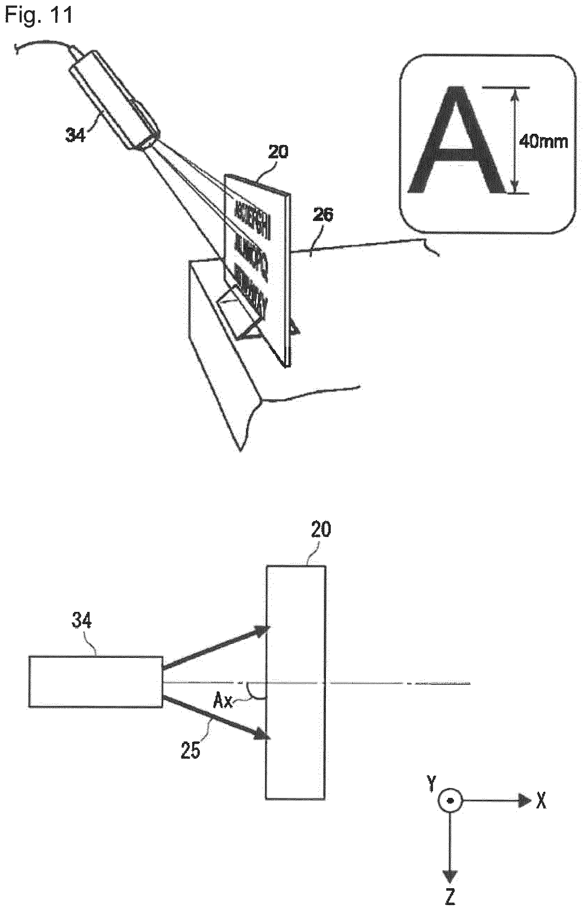

In a lower part of Fig. 11 is shown a screen 20 and a projector 34 as viewed in a plan view. In Figs. 11 to 13, image light 25 is projected on a rear side of the screen 20 from a plus Y direction as shown in the lower part of Fig. 11. When the screen 20 is viewed in the plan view, the image light 25 has an optical axis forming an angle Ax of 90 degrees with the screen 20.

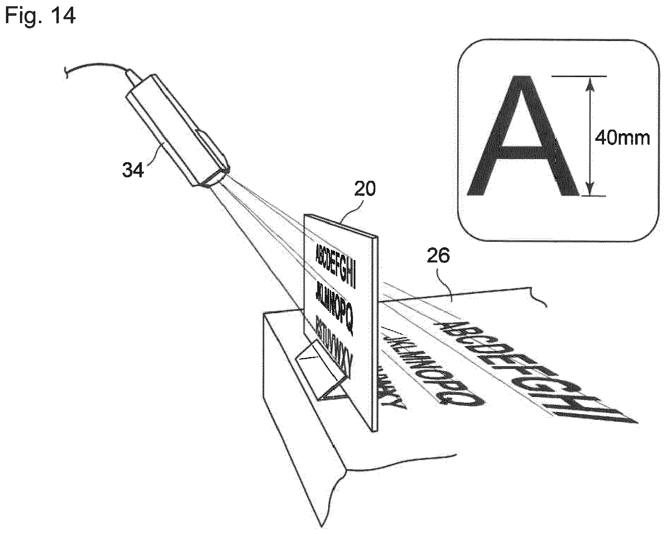

In each of Figs. 14 to 16 as well, image light is projected on a screen. Nevertheless, the screen 20 is replaced by a transparent screen having no vision control film.

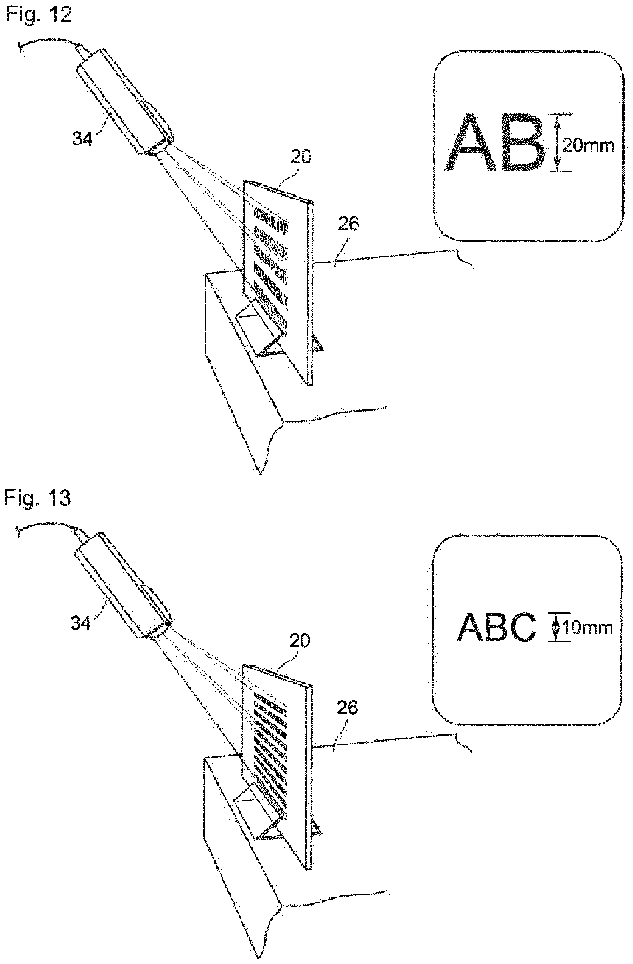

The image projected on the screen 20 shown in Fig. 11 as a schematic view includes alphabetical characters. In the schematic view of each Figure is seen characters projected on the rear side of the screen 20. When the screen 20 was observed from the front side of the screen, it was seen that the characters were projected in a reverse manner. This is also applicable to Figs. 12 to 16.

In Figs. 11 and 14, the projected image has a character size of 40 mm. The ratio of the character size to the distance to a table surface 26 is 0.5. The ratio is 1.0 at a lower part of the screen. The distance to the table surface 26 means a distance from a character projected on the screen 20 by the projector 34 to a point where an extension of a straight line connecting between the emission port of the projector and the character projected on the screen crosses the table surface.

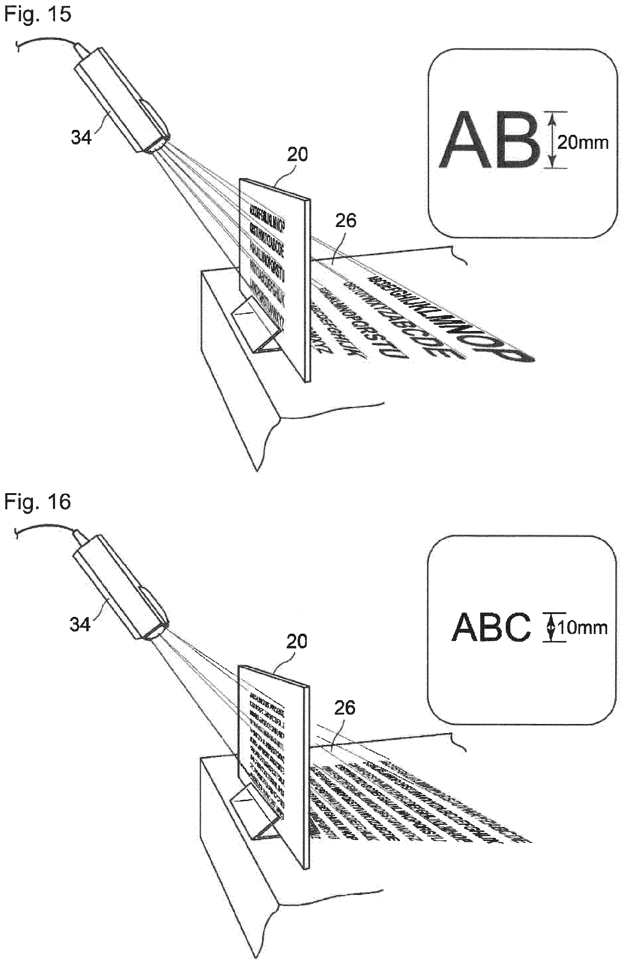

In each of Figs. 12 and 15, the projected characters have a size of 20 mm. The ratio of the character size to the distance to the table surface 26 is 0.25. In each of Figs. 13 and 16, the projected characters have a size of 10 mm. The ratio of the character size to the distance to the table surface 26 is 0.1.

In each of Figs. 11 to 13, the image light passes through the screen 20 and reaches the table surface 26. Nevertheless, no character profile is seen on the table surface 26. The shades on the table surface 26 are vague to such a degree that it is impossible to see where the characters are projected.

In each of Figs. 14 to 16, image light passes through the screen 20 and reaches the table surface 26. Based on the shades projected on the table surface 26, the character profiles can be seen. By comparing Figs. 14 to 16 with Figs. 11 to 13, it is concluded that downward image light is scattered by a vision control film.

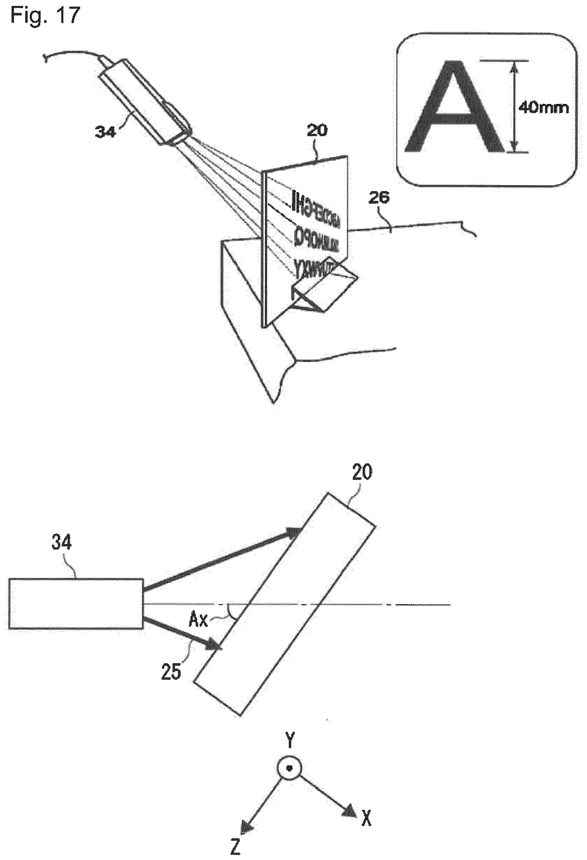

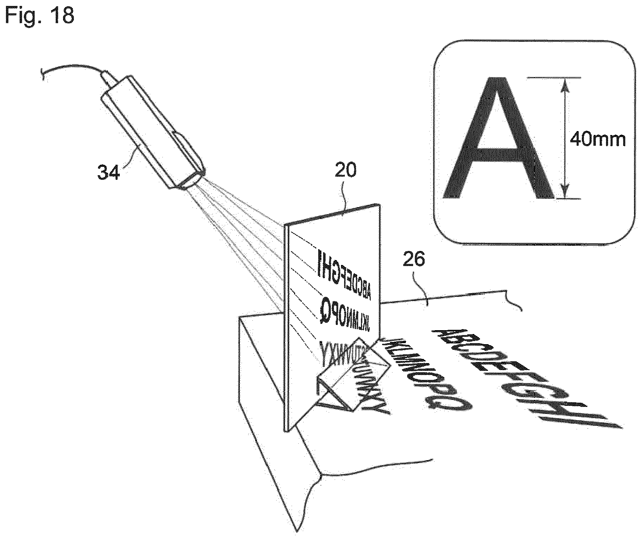

In a lower part of Fig. 17 is shown a screen 20 and a projector 34 as viewed in a plan view. In each of Figs. 17 and 18, image light 25 is projected on a rear side of the screen 20 from a plus Y direction and a plus Z direction as shown in the lower part of Fig. 17. When the screen 20 is viewed in a plan view, the image light 25 has an optical axis forming an angle Ax of 40 degrees to 45 degrees with the screen 20.

In Fig. 17, the image light passes through the screen 20 and reaches a table surface. Character profiles can be seen based on shades projected on a portion of the table surface 26 close to the screen 20. No character profile is, however, seen in other portions on the table surface 26.

In Fig. 18, image light passes through the screen 20 and reaches the table surface 26. Character profiles can be seen in any of shades projected on the table surface 26. By comparing Fig. 17 with Fig. 18, it is concluded that downward image light is scattered by a vision control film . Further, by comparing Fig. 11 with Fig. 17, it is determined that such effect can be obtained even when image light is projected from a right or left oblique direction.

By comparing Fig. 11 with Fig. 17, it is determined that when the angle Ax is at least 40 degrees, the scattering effect by a vision control film can be sufficiently obtained by setting the ratio of a character size to a distance to the table surface 26 at at least 2.0. In a case where the angle Ax is at most 40 degrees, it is determined that the scattering effect by the vision control film can be sufficiently obtained even when the ratio of a character size to a distance to the table surface 26 is set at a value of at most 2.0.

[10. Direction for installation]

The transparent screen 20 shown in Fig. 10 is disposed such that light entering into the second scattering layer from an upward direction is scattered more strongly than light entering into the second scattering layer from a lateral direction (see Figs. 2 and 3). As shown in each of Figs. 11 and 17, the projector 34 projects the image light 25 on the rear surface of the screen from an upward direction within 40 degrees in left and right on the side of the rear surface.

The transparent screen 20 shown in Fig. 10 may be disposed upside down so as to be turned over from the shown state such that light entering from a downward direction is scattered more strongly than light entering from a lateral direction in the second scattering layer. In this case, the projector projects image light on the rear surface of the screen from a downward direction within 40 degrees in left and right on the side of the rear surface.

The entire disclosure of Japanese Patent Application No. 2017-197937 filed on October 11, 2017 including specification, claims, drawings and summary is incorporated herein by reference in its entirety.

**Claims**

1. A transparent screen having an anisotropy with respect to light emitting therefrom, comprising:

    a first scattering layer, the first scattering layer functioning to project image light on the transparent screen and scattering the image light; and
    a second scattering layer, the second scattering layer providing the transparent screen with the anisotropy;
    wherein the first scattering layer is disposed on a side of a first surface of the transparent screen, and the second scattering layer is disposed on a side of a second surface of the transparent screen as a rear side of the first surface, or wherein the first scattering layer is disposed on the side of the second surface of the transparent screen, and the second scattering layer is disposed on the side of the first surface of the transparent screen; and
    wherein when the transparent screen is disposed so as to be directed perpendicularly and exhibit the anisotropy in upward and downward directions, light entering into a surface of the second scattering layer facing the first surface from an upward direction is scattered more strongly than light entering into the surface of the second scattering layer facing the first surface from a lateral direction in the second scattering layer.

2. The transparent screen according to Claim 1, wherein the transparent screen is a transmitting type screen, the transmitting type screen receiving the image light from a rear surface thereof and transmits the image light to a front surface thereof;
    wherein the first scattering layer is disposed on the side of the first surface of the transparent screen, and the second scattering layer is disposed on the side of the second surface of the transparent screen;
    wherein the first surface is the rear surface of the transparent screen;
    wherein the second surface is the front surface of the transparent screen;

wherein the image light enters into a side of the rear surface of the transparent screen from an upward direction and is projected, being scattered when passing through the first scattering layer;

wherein part of the image light emits as transmitted light in a downward direction from the first scattering layer without being scattered at the first scattering layer, and the transmitted light enters into the second scattering layer from an upward direction; and

wherein the transmitted light is scattered at the second scattering layer when passing through the second scattering layer.

3. The transparent screen according to Claim 1, wherein the transparent screen is a transmitting type screen, the transmitting type screen receiving the image light from a rear surface thereof and transmits the image light to a front surface thereof;

wherein the first scattering layer is disposed on the side of the second surface of the transparent screen, and the second scattering layer is disposed on the side of the first surface;

wherein the first surface is the rear surface of the transparent screen;

wherein the second surface is the front surface of the transparent screen;

wherein the image light enters into a side of the rear surface of the transparent screen from an upward direction and is scattered at the second scattering layer when passing through the second scattering layer;

wherein the scattered image light emits in a downward direction from the second scattering, and the scattered light enters into the first scattering layer from an upward direction; and

wherein the scattered light is projected, being further scattered when passing through the first scattering layer.

4. The transparent screen according to Claim 2 or 3, wherein the transparent screen has a turbidity of at most 40% with respect to light entering into the rear surface of the transparent screen from a lateral direction and emitting from the front surface of the transparent screen in the lateral direction in a section from 15 degrees above to 20 degrees below with respect to a horizontal direction;

wherein the transparent screen has a turbidity of at least 50% with respect to light entering into the rear surface of the transparent screen from an upward direction and emitting from the front surface of the transparent screen in a downward direction in a section effective within at least 44 degrees in a range of 20 degrees below to 81 degrees below with respect to the horizontal direction; and

wherein the turbidity represents a clouding degree depending on an incident angle of light, and the turbidity has a strength represented by the following formula:

$$100 \times (1 - \text{(light flux having an inclination angle of} \pm 8.5 \text{ degrees to optical axis)} / \text{(light flux having an inclination angle of} \pm 1.7 \text{ degrees to optical axis)}) \, (\%).$$

5. The transparent screen according to any one of Claims 2 to 4, wherein the second scattering layer includes a louver structure where two kinds of layers having different refractive indices are alternately laminated; and

wherein the louver structure has a laminating direction crossing with a thickness direction of the second scattering layer, and the two kinds of layers are disposed to be inclined.

6. The transparent screen according to any one of Claims 2 to 5, wherein the first scattering layer is disposed between two transparent plates disposed on a side of the front surface and the side of the rear surface of the screen, respectively; and

wherein the second scattering layer confronts the first scattering layer with a transparent plate on the side of the front surface being interposed between the second scattering layer and the first scattering layer.

7. The transparent screen according to Claim 6, wherein each of the two transparent plates is made of glass; and

wherein the second scattering layer is bonded, as a film, to the transparent plate on the side of the front surface.

8. The transparent screen according to any one of Claims 2 to 7, wherein the transparent screen is configured to be disposed in a perpendicular direction or in a direction other than the perpendicular direction and configured to be disposed so as to exhibit the anisotropy in an upward direction, a downward direction or a direction other than these directions.

9. An image display system including the transparent screen recited in any one of Claims 2 to 8, and a projector; wherein;

(a) the transparent screen is disposed such that the light entering from the upward direction is scattered more strongly than the light entering from the lateral direction in the second scattering layer, and
the projector projects the image light in an upward direction on the side of the rear surface toward the rear surface from a direction within 40 degrees in right and left, or
(b) the transparent screen is disposed upside down such that the light entering from a downward direction is scattered more strongly than the light entering from the lateral direction in the second scattering layer, and
the projector projects the image light in a downward direction on the side of the rear surface toward the rear surface from a direction within 40 degrees in right and left.

10. A structure, which is any one of an architecture, a vehicle, a ship and an airplane, including the image display system recited in Claim 9;
wherein the transparent screen is disposed at a site where outdoor light is applied to the transparent screen;
wherein the image display system displays an image toward outside the structure; and
wherein the transparent screen and the projector are disposed as recited in (a) of Claim 9.

11. The transparent screen according to Claim 1, which is a reflective screen, the reflective screen receiving the image light on a front surface thereof and returning the image light from the front surface;
wherein the first scattering layer is disposed on the side of the first surface of the transparent screen, and the second scattering layer is disposed on the side of the second surface of the transparent screen;
wherein the first surface is the front surface of the transparent screen;
wherein the second surface is a rear surface of the transparent screen;
wherein the image light enters into the side of the front surface of the transparent screen from an upward direction and is projected, being scattered when being reflected at the first scattering layer;
wherein part of the image light emits as transmitted light in a downward direction from the first scattering layer without being scattered at the first scattering layer, and the transmitted light enters into the second scattering layer from an upward direction; and
wherein the transmitted light is scattered at the second scattering layer when passing through the second scattering layer.

12. The transparent screen according to Claim 1, which is a reflective screen, the reflective screen receiving the image light on a front surface thereof and returning the image light from the front surface;
wherein the first scattering layer is disposed on the side of the second surface of the transparent screen, and the second scattering layer is disposed on the side of the first surface of the transparent screen;
wherein the first surface is the front surface of the transparent screen;
wherein the second surface is a rear surface of the transparent screen;
wherein the image light enters into a side of the front surface of the transparent screen from an upward direction, and is scattered at the second scattering layer when passing through the second scattering layer;
wherein the scattered image light emits in a downward direction from the second scattering layer, and the scattered light enters into the first scattering layer from an upward direction; and
wherein the scattered light is projected, being further scattered when being reflected at the first scattering layer.

13. A transparent screen having an anisotropy with respect to light emitting therefrom;
wherein the anisotropy is such that when the transparent screen is displaced so as to be directed perpendicularly and exhibit the anisotropy in upward and downward directions, light emitting in a downward direction from a side of a second surface of the transparent screen as a rear side of a first surface of the transparent screen after entering from an upward direction on a side of the first surface of the transparent screen is scattered more strongly than light emitting from the side of the second surface in a lateral direction after entering into the side of the first surface of the transparent screen from an upward direction; and
wherein the lateral direction includes a horizontal direction.

14. A transparent screen having an anisotropy with respect to light emitting therefrom, including:

a scattering layer, the scattering layer functioning to project image light on the transparent screen, being disposed on a side of a first surface of the transparent screen and scattering the image light; and
an absorber layer, the absorber layer being disposed on a side of a second surface of the transparent screen as a rear side of the first surface and providing the transparent screen with the anisotropy:

wherein when the transparent screen is displaced so as to be directed perpendicularly and exhibit the anisotropy in upward and downward directions, light entering from an upward direction into a surface of the absorber layer facing the first surface of the transparent screen is absorbed more than light entering from a lateral direction into the surface of the absorber layer facing the first surface.

15. The transparent screen according to any one of Claims 11 to 14, which the transparent screen is configured to be disposed in a perpendicular direction or in a direction other than the perpendicular direction and configured to be disposed so as to exhibit the anisotropy in an upward direction, a downward direction or a direction other than these directions.

Fig. 1

Fig. 2

Fig. 3

Fig. 4

Fig. 5

Fig. 6

Fig. 7

Fig. 8

## Fig. 9

Fig. 10

Fig. 11

40mm

Fig. 12

34

20

26

AB ‖20mm

Fig. 13

34

20

26

ABC ⊺10mm

Fig. 14

34

20

26

40mm

Fig. 15

34

20

26

AB ⥮20mm

Fig. 16

34

20

26

ABC ⥮10mm

Fig. 17

Fig. 18

34

20

26

40mm

## REFERENCES CITED IN THE DESCRIPTION

**Patent documents cited in the description**

- WO 2015199026 A
- JP 2003294952 A
- WO 2013108540 A
- JP 2017197937 A